# EUROPÄISCHE PATENTANMELDUNG

(11) **EP 4 528 136 A1**
(43) Veröffentlichungstag der Anmeldung: **26.03.2025**
(21) Anmeldenummer: 23199504.4
(22) Anmeldetag: 25.09.2023
(51) Int. Cl.: F16K 11/20, F15B 15/28, F16K 31/06, F16K 37/00, G01D 5/14

(54) **VENTILVORRICHTUNG**

(71) Anmelder: Eugen Seitz AG, 8623 Wetzikon (CH)
(72) Erfinder: HUG, Thomas, 8623 Wetzikon (CH); KEEL, Manuel, 5103 Wildegg (CH); ERNI, Marco, 5632 Buttwil (CH)
(74) Vertreter: Clerc, Natalia

(57) **Zusammenfassung**

Eine Ventilvorrichtung umfasst
- ein Ventil, das einen bewegbaren Kolben (21) zum Schliessen und Öffnen des Ventils aufweist,
- ein Magnet (22) oder ein magnetisierbares Element und
- eine Sensoreinheit (6), die einen Magnetfeldsensor (64) zur Bestimmung einer Position des Kolbens (21) aufweist.

Der Magnet (22) oder das magnetisierbare Element und die Sensoreinheit (6) sind durch die Bewegung des Kolbens (22) relativ zueinander bewegbar. Der Magnetfeldsensor (64) ist zur Erfassung eines mindestens zweidimensionalen Vektors einer magnetischen Flussdichte ausgebildet. Eine Auswerteeinheit bestimmt eine Winkeländerung des mindestens zweidimensionalen Vektors. Die Ventilvorrichtung und ein entsprechendes Verfahren ermöglichen eine genaue Positionsbestimmung des Kolbens auch bei beengten Platzverhältnissen.

## Beschreibung

### TECHNISCHES GEBIET

Die vorliegende Erfindung betrifft eine Ventilvorrichtung, insbesondere eine Ventilvorrichtung in einer Hockdruckumgebung, beispielsweise für Wasserstoffanwendungen. Sie betrifft insbesondere eine Ventilvorrichtung für Wasserstoff tankstellen. Sie eignet sich ebenfalls zur Verwendung in Blasformvorrichtungen, beispielsweise in einer Extrusionsblas- oder Streckblasmaschine zur Fertigung von Hohlkörpern aus Kunststoff unter Verwendung von Druckluft. Die Erfindung betrifft zudem ein Verfahren zur Bestimmung einer Position eines Kolbens in dieser Ventilvorrichtung.

### STAND DER TECHNIK

Ventilvorrichtungen werden in verschiedenen Bereichen eingesetzt. Elektromagnetisch und/oder pneumatisch betriebene Ventile schliessen und öffnen das Ventil nach Massgabe einer Steuerung.

In vielen Anwendungsbereichen besteht das Bedürfnis zu erkennen, ob das Ventil offen oder geschlossen ist. Dies ist beispielsweise bei Ventilen in Hochdruckumgebungen, insbesondere in Wasserstoffanwendungen, wie beispielsweise Wasserstofftankstellen, der Fall.

Es ist im Stand der Technik bekannt, Magnetfeldsensoren, insbesondere Hallsensoren, zu verwenden, um ein Ventil zu überwachen.

DE 37 30 940 A1 offenbart ein vorgesteuertes Wege-Ventil mit einem bewegbaren Kolben, dessen Position mittels eines Hall-Sensors gemessen wird. Im Kolben ist mittig ein Permanentmagnet angeordnet. Der Hall-Sensor befindet sich ortsfest in einer Zwischenplatte zwischen einer Vorsteuerung und einem Ventilgehäuse.

In DE 44 17 464 A1 ist ein Ventil gezeigt mit einem durch ein Pilotteil betätigtes Spulenglied und einem Hall-Sensor, der die Bewegungstendenz des Spulenglieds erfasst, um festzustellen, ob das Spulenglied nicht festhaftet.

CN 103148222 A beschreibt ein hydraulisches Steuerventil mit einem elektromagnetischen Pilotventil und einem Hall-Sensor.

Die Magnetfeldsensoren bestimmen jeweils die Feldstärke und können so erkennen, ob das Ventil geschlossen bzw. offen ist. Der Magnetfeldsensor muss hierzu relativ nahe am beweglichen Magnetfeldübertragungsmittel, d.h. an den Permanentmagneten, angeordnet sein, um eine zuverlässige Messung zu gewährleisten. Eine ortsnahe Anordnung ist aus Platzgründen jedoch oft erschwert. Zudem beeinflussen Störelemente, wie beispielsweise Bauteile aus Metall oder Magnetspulen, die Messung. Ferner ist es in einigen Anwendungsbereichen vorteilhaft, wenn auch Zwischenpositionen des Ventils erkannt werden können. Dies ist beispielsweise für die Fehlersuche in Herstellungsprozessen oder aus Sicherheitsaspekten der Fall.

### DARSTELLUNG DER ERFINDUNG

Es ist deshalb eine Aufgabe der Erfindung, eine verbesserte Ventilvorrichtung mit Positionsbestimmung des Kolbens zu schaffen.

Diese Aufgabe löst eine Ventilvorrichtung mit den Merkmalen des Anspruchs 1 bzw. 15 sowie ein Verfahren mit den Merkmalen des Anspruchs 14.

In einigen Ausführungsformen weist die erfindungsgemässe Ventilvorrichtung ein Ventil auf, das einen bewegbaren Kolben zum Schliessen und Öffnen des Ventils aufweist. Die Ventilvorrichtung weist einen Magneten oder ein magnetisierbares Element sowie eine Sensoreinheit auf, die einen Magnetfeldsensor zur Bestimmung einer Position des Kolbens aufweist. Der Magnet oder das magnetisierbare Element und die Sensoreinheit sind durch die Bewegung des Kolbens relativ zueinander bewegbar. Der Magnetfeldsensor ist zur Erfassung eines mindestens zweidimensionalen Vektors einer magnetischen Flussdichte ausgebildet. Eine Auswerteeinheit ist vorhanden, die eine Winkeländerung des mindestens zweidimensionalen Vektors bestimmt.

Im Verfahren zur Bestimmung einer Position eines Kolbens in einer Ventilvorrichtung erfasst der Magnetfeldsensor einen mindestens zweidimensionalen Vektor einer magnetischen Flussdichte. Erfindungsgemäss wird mittels der Auswerteeinheit die Winkeländerung des mindestens zweidimensionalen Vektors bestimmt. Die Winkeländerung erfolgt, wenn sich bei Bewegung des Kolbens der Magnet oder das magnetisierbare Element relativ zur Sensoreinheit bewegt.

Im Gegensatz zu bekannten Positionssensoren wird nicht die Feldstärke bestimmt, sondern das Magnetfeld wird in mindestens zwei Richtungen ausgewertet. Dadurch ist die Messung nicht mehr von der Temperaturabhängigkeit der Feldstärke des Magnets abhängig. Vorzugsweise wird das Feld zweidimensional oder dreidimensional gemessen und ein Raumvektor berechnet. Vorzugsweise findet eine Transformation von einem kartesischen Koordinatensystem in ein Kugelkoordinatensystem statt. Vorzugsweise wird ein Koordinatensystem mit Nullpunkt im Magnetfeldsensor in einen Bezug zu einem Koordinatensystem mit Nullpunkt im Magnet bzw. im magnetisierbaren Element gebracht. Vorzugsweise wird es hierzu entsprechend ausgerichtet, ohne dass die Nullpunkte der zwei Koordinatensysteme übereinstimmen. Vorzugsweise wird das Koordinatensystem mit Nullpunkt im Magnetfeldsensor so rotiert, dass eine Hauptachse des Koordinatensystems parallel zu einer Bewegungsrichtung des Kolbens des Ventils liegt.

Dank der erfindungsgemässen Lösung muss der Magnetfeldsensor nicht mehr zwingend senkrecht zur Längsachse des Kolbens oder parallel dazu angeordnet werden. Er lässt sich auch schräg zum Kolben ausrichten. Dies erhöht die Möglichkeiten für einen Einbau der Sensoreinheit in die Ventilvorrichtung. Dies ist besonders bei beengten Platzverhältnissen vorteilhaft. Eine spezifische Ausbildung der erfindungsgemässen Sensoreinheit lässt sich dank ihrer Flexibilität bezüglich der Einbauweise in unterschiedlich ausgebildeten Ventilvorrichtungen anwenden. Dies minimiert die Herstellungskosten, da derselbe Typ der Sensoreinheit mehrfach verwendet werden kann.

Weist die Ventilvorrichtung zwei oder mehr Ventile auf, so können dank der Flexibilität der Anordnung der Sensoreinheit auch zwei oder mehr Sensoreinheiten in der Ventilvorrichtung angeordnet werden. Dadurch lässt sich mehr als ein Ventil einer Ventilvorrichtung, insbesondere eines Ventilblocks, mit einer eigens zugeordneten Sensoreinheit überwachen.

Wenn der Magnetfeldsensor im ortsfesten Teil der Ventilvorrichtung angeordnet ist, lässt er sich nahe beim bewegbaren Kolben anordnen. Dies erhöht die Messgenauigkeit.

Eine genauere Messung der Position ist möglich. Störeinflüsse lassen sich leichter eliminieren. Ferner lassen sich auch Zwischenposition des Kolbens bestimmen, so dass nicht nur die geöffnete und geschlossene Position erkannt wird. Die angegebene Position ist je nach Ausführungsform jedoch nicht zwingend eine genaue Position, sondern der geschlossene und geöffnete Zustand wird mindestens in einigen Ausführungsformen innerhalb einer Bandbreite angegeben. Ist eine optische Anzeige vorhanden, so kann beispielsweise ein rotes Licht einen vollständig bis annähernd vollständig offenen Zustand des Ventils anzeigen, ein grünes Licht zeigt einen vollständig oder annähernd vollständig geschlossenen Zustand des Ventils an und ein blaues Licht zeigt die Zwischenposition des Kolbens an. In weiteren Ausführungsformen sind andere Farben und/oder feinere Abstufungen vorhanden.

Vorzugsweise werden alle Koordinaten des kartesischen Koordinatensystems für die Umrechnung in das Kugelkoordinatensystem verwendet. Wird die Sensoreinheit nicht ausgerichtet im Ventilblock montiert, werden vorzugsweise lediglich der Axialwinkel und der Betrag des Vektors, d.h. seine Länge, berücksichtigt. Wird die Sensoreinheit ausgerichtet im Ventilblock montiert, so wird vorzugsweise auch der Radialwinkel berücksichtigt.

In bevorzugten Ausführungsformen wird jedoch der dreidimensionale Vektor sowohl bestimmt und als auch ausgewertet. Die erhöht die Messgenauigkeit und ermöglicht eine freie Wahl des Winkels, in welchem der Magnetfeldsensor relativ zum Kolben bzw. zum gemessenen Magnetfeld angeordnet ist. In bevorzugten Ausführungsformen ist der Magnetfeldsensor deshalb zur Erfassung eines dreidimensionalen Vektors einer magnetischen Flussdichte ausgebildet.

Es lassen sich alle Magnetfeldsensoren verwenden, die zur Erfassung der Raumvektoren der Magnetfeldlinien ausgebildet sind. Vorzugsweise ist der Magnetfeldsensor mindestens ein 2D Hallsensor und noch bevorzugter mindestens ein 3D Hallsensor.

In bevorzugten Ausführungsformen ist der Magnet ein Permanentmagnet. Der Permanentmagnet ist vorzugsweise aus einem hartmagnetischen Material gefertigt. In anderen Ausführungsformen ist der Magnet ein Elektromagnet.

Das magnetisierbare Element ist vorzugsweise aus einem weichmagnetischen Werkstoff gefertigt und noch bevorzugter aus einem magnetisch leitenden Material mit geringer Remanenz und noch bevorzugter aus einem magnetisch leitenden Material mit sehr geringer Remanenz.

Vorzugsweise ist der Magnet oder das magnetisierbare Element im Kolben angeordnet und die Sensoreinheit ist ortsfest angeordnet. Dies erleichtert die Montage der Sensoreinheit und ermöglicht eine Kabelverbindung von der Sensoreinheit zu einer Steuervorrichtung. Des Weiteren lässt sich der Kolben kostengünstig herstellen.

Ist das magnetisierbare Element im Kolben angeordnet, so ist ein zugehöriger Magnet, insbesondere ein Permanentmagnet oder ein Elektromagnet, vorzugsweise ortsfest angeordnet, vorzugsweise benachbart zur Sensoreinheit.

Der Magnet oder das magnetisierbare Element definieren ein dreidimensionales kartesisches Koordinatensystem mit drei Achsen. Der Nullpunkt liegt vorzugsweise in der Mitte des Magneten, wenn das Ventil geschlossen ist. Die Sensoreinheit definiert ebenfalls ein dreidimensionales kartesisches Koordinatensystem mit drei Achsen. Der Nullpunkt liegt vorzugsweise in der Mitte des Sensorelements.

Der Magnetfeldsensor lässt sich beliebig im Koordinatensystem des Magneten anordnen. Vorzugsweise wird er jedoch unter Berücksichtigung der vorhandenen Platzverhältnisse so angeordnet, dass er durch die Bewegung des Kolbens erzeugte Winkeländerungen des zweidimensionalen oder dreidimensionalen Vektors der magnetischen Flussdichte optimal erkennen kann.

In Abhängigkeit der Ausbildung der Ventileinheit und der Platzverhältnisse lässt sich der Magnetfeldsensor somit auch in einem Winkel, d.h. schräg, zu den drei Achsen des kartesischen Koordinatensystems anordnen. D.h. die Sensorelemente des Sensors lassen sich schräg zu den Achsen anordnen.

Der Magnet oder das magnetisierbare Element sind vorzugsweise scheibenförmig, ringförmig, zylindrisch, prismatisch oder stabförmig. Ist der Kolben des Ventils drehbar, so ist der Magnet oder das magnetisierbare Element vorzugsweise rotationssymmetrisch.

Vorzugsweise ist der Magnet oder das magnetisierbare Element zentrisch zu einer Längsmittelachse des Kolbens angeordnet. Dies erleichtert die Berechnung der Position des Kolbens, da dadurch seine Längsmittelachse mit einer Achse des kartesischen Koordinatensystems übereinstimmt. Dies ist insbesondere bei einem drehbaren Kolben vorteilhaft.

Vorzugsweise wird im erfindungsgemässen Verfahren der erfasste Magnetfeldvektor vom kartesischen Koordinatensystem der Sensoreinheit in ein Kugelkoordinatensystem umgerechnet.

Vorzugsweise ist nicht nur der Magnetfeldsensor, sondern die gesamte Sensoreinheit schräg zu einer Längsmittelachse des Kolbens angeordnet. Dies erleichtert die Platzierung der Sensoreinheit in der Ventilvorrichtung nahe beim Kolben, insbesondere bei beengten Platzverhältnissen. Kompakte Bauweisen sind dadurch erleichtert. Insbesondere ist es in sogenannten Manifolds von Wasserstofftankstellen, bei denen eine Vielzahl von Ventilvorrichtungen matrixartig zu einer Einheit zusammengefasst sind, möglich, jede Ventilvorrichtung mit mindestens einer Sensoreinheit zu versehen.

Ventilvorrichtungen weisen teilweise Magnetventile mit einer Leiterspule auf, die ein Magnetfeld erzeugt. Dieses Magnetventil kann dasjenige sein, dessen Kolben mittels der Sensoreinheit überwacht werden soll. Es kann jedoch auch ein zweites Ventil sein, das benachbart zum überwachten Ventil angeordnet ist, beispielsweise innerhalb desselben Ventilblocks. Beispielsweise kann es ein Pilotventil eines vorgesteuerten pneumatischen Ventils sein. Das von der Leiterspule erzeugte Magnetfeld beeinflusst die Magnetfeldmessung. Derartige Magnetventile unterliegen einem Verschleiss und müssen deshalb regelmässig ersetzt werden. Um eine gleichwertige Messung bei ausgewechseltem Magnetventil zu gewährleisten, ist es vorteilhaft, wenn die Leiterspule mit einer vordefinierten Bestromungsrichtung in der Ventilvorrichtung angeordnet ist. Dadurch ist das von den Leiterspulen erzeugte Störfeld innerhalb der Ventilvorrichtung stets gleich gerichtet. Dadurch ist die Polarität des Störfeldes stets gleich in Bezug auf den Kolben und den Magnetfeldsensor. Ist der Magnet im Kolben angeordnet, so wird er bei Wartungen regelmässig gemeinsam mit dem Kolben ausgewechselt. Vorzugsweise ist deshalb der Magnetpol in jedem Kolben stets gleich ausgerichtet. Das Störfeld kann entsprechend auf dieselbe Art und Weise durch die Auswerteeinheit berücksichtigt bzw. kompensiert werden.

Der Einfluss des Magnetfelds der Leiterspule lässt sich reduzieren, wenn das Gehäuse des Magnetventils aus Metall ist. Dies ist insbesondere dann der Fall, wenn das Magnetventil nicht das überwachte Ventil ist. Der Einfluss des Störfeldes lässt sich alternativ oder zudem reduzieren, wenn zwischen der Leiterspule und dem Magnetfeldsensor ein Umlenkungselement aus einem magnetisch leitenden Material angeordnet ist. Dies ist insbesondere dann vorteilhaft, wenn das Magnetventil nicht das überwachte Ventil ist. Das Umlenkungselement ist vorzugsweise aus einem magnetisch leitenden Material, d.h. einem magnetisierbaren Material gefertigt, beispielsweise aus Stahl. Es lenkt die Magnetfeldlinien des Störfeldes in geeigneter Weise um. Das Umlenkungselement ist beispielsweise eine Ringplatte oder eine Hülse, das bzw. die vorzugsweise um den Anker des Magnetventils angeordnet ist oder einen Teil des Ankers, vorzugsweise den der Leiterspule abgewandte Teil, bildet. Die Hülse ist vorzugsweise ein Teil des Führungsrohrs des Ankers.

Die Verwendung eines Umlenkungselement wird hier als eigenständige Erfindung beansprucht. Dieses Magnetfeld-Umlenkungselement lässt sich auch in anderen Sensoreinheiten für Ventilvorrichtungen verwenden, ohne dass die Sensoreinheit die Winkeländerungen bestimmt oder schräg angeordnet ist.

Magnetfeldsensoren sind temperaturabhängig. Ferner lassen sich Magnetfeldsensoren und auch andere Komponenten der Sensoreinheit, wie beispielsweise die Auswerteeinheit, üblicherweise lediglich bis zu Temperaturen von ca. - 40°C verwenden. Ventileinheiten für Wasserstoffanwendungen sind jedoch teilweise Temperaturen von bis zu -50°C oder tiefer ausgesetzt. Vorzugsweise weist die Sensoreinheit deshalb eine Heizung zur Erwärmung des Magnetfeldsensors und/oder der Auswerteeinheit auf. Vorzugsweise wird ein Heizwiderstand verwendet. Je nach Ausführungsform erwärmt die Heizung mehrheitlich den Magnetfeldsensor mit oder ohne die Auswerteeinheit und/oder weitere Komponenten der Sensoreinheit. In einigen bevorzugten Ausführungsformen ist die Auswerteeinheit Bestandteil der Sensoreinheit, insbesondere Teil eines Mikroprozessors der Steuereinheit. In anderen Ausführungsformen ist sie Teil einer separaten Steuerung.

Vorzugsweise wird der Magnetfeldsensor auf eine vorbestimmte Temperatur bzw. auf einen vorbestimmten Temperaturbereich temperiert, d.h. auf dieser Temperatur gehalten. Dies erhöht die Messgenauigkeit. Vorzugsweise weist die Sensoreinheit hierzu einen Temperatursensor auf.

Beinhaltet die Sensoreinheit weitere Komponenten, wie beispielsweise die Auswerteeinheit, so ist es aus Sicherheitsgründen vorteilhaft, wenn alle Komponenten in einem Gehäuse angeordnet sind, dessen Hohlraum vergossen ist. Beispielsweise ist für viele Anwendungen ein Explosionsschutz zu gewährleisten. Die Vergussmasse ist vorzugsweise Epoxid, Polyurethan oder Silikon. Derartige Vergussmassen schützen zwar die Komponenten, sie wirken jedoch thermisch isolierend.

Um auch bei vergossenen Sensoreinheiten eine optimale Temperierung des Magnetfeldsensors mit einer minimierten Heizleistung zu ermöglichen, ist vorzugsweise die Anordnung der Komponenten wie folgt gewählt: Der Magnetfeldsensor ist auf einer ersten Seite einer Leiterplatte angeordnet und die Heizung ist auf einer der ersten Seite gegenüberliegenden Seite der Leiterplatte angeordnet. Die Leiterplatte weist Durchgangsöffnungen auf, die sich im Bereich der Heizung von der zweiten Seite zur ersten Seite der Leiterplatte erstrecken. Die Durchgangsöffnungen werden auch Vias genannt. In den Durchgangsöffnungen ist ein Wärmeleiter angeordnet. Die Innenwandung der Vias ist hierzu vorzugsweise über die gesamte Länge mit einer Kupferschicht oder einem anderen gut wärmeleitenden Material überzogen. Dadurch wird die Wärme von der Heizung gezielt auf die Seite des Magnetfeldsensor gebracht. Die auf dieser Seite angeordneten elektrischen Leiterbahnen leiten die Wärme zum Magnetfeldsensor weiter. Vorzugsweise ist die Heizung benachbart, jedoch beabstandet, zum Magnetfeldsensor angeordnet. Vorzugsweise ist ein Wärmeleitpad, d.h. eine wärmeleitende Matte, zwischen der Heizung und der Leiterplatte angeordnet, um die von der Heizung erzeugte Wärme in die Vias zu leiten. Die zur Temperierung der Bauteile, insbesondere des Magnetfeldsensors, notwendige Heizleistung kann durch Anwendung einiger oder all dieser Massnahmen minimiert werden. Vorzugsweise dienen auch Kupferbahnen der Leiterplatte als Wärmeleitung, insbesondere auf der Seite der Heizung. Die Anordnung der Heizung auf der dem Magnetfeldsensor gegenüberliegenden Seite der Leiterplatte ermöglicht eine platzsparende Anordnung. In einigen Ausführungsformen ist die Heizung jedoch auf derselben Seite wie der Magnetfeldsensor angeordnet.

Vorzugsweise wird als Heizung ein temperaturabhängiger Heizwiderstand verwendet, dessen Wärmeleistung bei steigender Temperatur sinkt. Vorzugsweise steigt sein Widerstandswert ab einer gewissen Temperatur exponentiell an. Dies verhindert eine Überhitzung und erhöht den Explosionsschutz. Vorzugsweise wird ein PTC-Widerstand verwendet.

Die Anordnung der Heizung auf der dem Magnetfeldsensor gegenüberliegenden Seite der Leiterplatte und die Wärmeübertragung mittels der Vias werden hiermit als eigenständige Erfindung beansprucht. Diese Anordnung lässt sich auch in anderen Sensoreinheiten für Ventilvorrichtungen verwenden, ohne dass die Sensoreinheit die Winkeländerungen bestimmt oder schräg angeordnet ist. In einer bevorzugten Variante sind die Durchgangsöffnungen mit einem wärmeleitenden Material versehen, vorzugsweise ist die Innenseite entsprechend beschichtet oder die Durchgangsöffnungen sind vollständig mit einem wärmeleitenden Material gefüllt. Alternativ oder zusätzlich ist vorzugsweise ein wärmeleitendes Pad zwischen der Heizung und der Leiterplatte angeordnet. Alternativ oder zusätzlich ist zwischen dem Magnetfeldsensor und der Leiterplatte ein wärmeleitendes Pad vorhanden. Vorzugsweise befinden sich die Komponenten in einem ausgegossenen Gehäuse der Sensoreinheit.

Die Leiterplatte ist vorzugsweise mehrlagig ausgebildet. Vorzugsweise ist sie eine FR-4 Leiterplatte, d.h. sie besteht aus einem schwer entflammbaren und flammenhemmenden Material.

Vorzugsweise ist die Sensoreinheit stabförmig ausgebildet. Sie weist vorzugsweise ein Gehäuse auf, wobei das Gehäuse eine längliche Form aufweist und in einem freien Endbereich endet. Der Magnetfeldsensor ist vorzugsweise im freien Endbereich angeordnet. Vorzugsweise beinhaltet das Gehäuse alle Komponenten der Sensoreinheit. Vorzugsweise ist die Auswerteeinheit ebenfalls Bestandteil der Sensoreinheit und somit vorzugsweise ebenfalls im Gehäuse angeordnet.

Die Anordnung des Magnetfeldsensors im freien Endbereich, insbesondere in einem verjüngten Endbereich, des Gehäuses weist den Vorteil auf, dass er in der Ventilvorrichtung möglichst nahe an den Kolben bzw. dessen Magnet angeordnet werden kann. Dies optimiert die Messung.

Das Gehäuse weist vorzugsweise Mittel zur Fixierung der Sensoreinheit in einer Ausnehmung der Ventilvorrichtung, insbesondere des Ventilblocks, auf.

Vorzugsweise ist ein Kabel zur Verbindung mit einer externen Steuereinheit vorhanden. Vorzugsweise ist das Kabel im Gehäuse vergossen und über eine Kabelverschraubung zusätzlich fixiert. Dies erhöht den Explosionsschutz.

In einigen Ausführungsformen bildet die erfindungsgemässe Sensoreinheit eine eigenständige Einheit, die in der Ventilvorrichtung, insbesondere in einem Ventilblock, angeordnet werden kann. Sie kann vorzugsweise in einen in einer Anlage montierten Ventilblock eingesetzt und wieder aus ihm entfernt werden. Dies erleichtert die Wartung der Ventilvorrichtung bzw. der Anlage. Die Sensoreinheit weist den Magnetfeldsensor zur Bestimmung der Position des Kolbens auf. Der Magnetfeldsensor ist zur Erfassung eines mindestens zweidimensionalen Vektors einer magnetischen Flussdichte ausgebildet. Die als eigenständige Einheit ausgebildete Sensoreinheit weist zudem vorzugsweise die Auswerteeinheit auf, die eine Winkeländerung des mindestens zweidimensionalen Vektors bestimmt.

Die Sensoreinheit ist vorzugsweise mit einer Steuereinheit der Ventilvorrichtung oder einer Anlage, in der die Ventilvorrichtung verwendet wird, verbunden. Die Sensoreinheit übermittelt vorzugsweise die Statusinformationen zum Kolben an diese Steuereinheit. Somit ist die Information, in welchem Zustand sich der Kolben befindet, digital vorhanden.

Alternativ oder zusätzlich weist die Sensoreinheit vorzugsweise eine optische Anzeige auf, die anzeigt, ob die Sensoreinheit betriebsfähig ist. Alternativ oder zusätzlich kann sie die Position des Kolbens anzeigen. Die optische Anzeige ist beispielsweise ein Licht, insbesondere von einem LED oder mehreren LED's, die in einem Gehäuse der Sensoreinheit angeordnet sind. Insbesondere sind sie auf der Leiterplatte angeordnet. Vorzugsweise ist im Gehäuse mindestens ein Durchbruch, d.h. ein Fenster, für die optische Positionsanzeige vorhanden. Die optische Anzeige ist vorzugsweise von einem Benützer auch dann erkennbar, wenn die Ventilvorrichtung gemeinsam mit der Sensoreinheit in einer Anlage eingebaut ist.

In einigen Ausführungsformen weist die erfindungsgemässe Ventilvorrichtung ein Ventil auf, das einen bewegbaren Kolben zum Schliessen und Öffnen des Ventils aufweist. Die Ventilvorrichtung weist einen Magneten oder ein magnetisierbares Element sowie eine Sensoreinheit auf, die einen Magnetfeldsensor zur Bestimmung einer Position des Kolbens aufweist. Der Magnet oder das magnetisierbare Element und die Sensoreinheit sind durch die Bewegung des Kolbens relativ zueinander bewegbar. Der Magnetfeldsensor, vorzugsweise die gesamte Sensoreinheit, ist schräg zu einer Längsmittelachse des Kolbens und/oder des Magneten angeordnet. Je nach Ausführungsform dieser Ventileinheit erfolgt die Messung wie oben angegeben mittels der Bestimmung der Winkeländerung oder mittels einer anderen Messmethode, insbesondere durch Bestimmung der Feldstärke. Diese Ventilvorrichtung lässt sich mit den Merkmalen der abhängigen Ansprüche und den obigen Merkmalen kombinieren, auch ohne die Bestimmung der Winkeländerung. Dies insbesondere bei Verwendung einer Kompensation für die Temperaturabhängigkeit der Feldstärkenmessung oder bei einer konstant gehaltenen Temperatur des Magneten.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine perspektivische Darstellung einer erfindungsgemässen Ventilvorrichtung in einer ersten Ausführungsform;
- Figur 2: einen Längsschnitt durch eine erfindungsgemässe Ventilvorrichtung in einer zweiten Ausführungsform;
- Figur 3: einen Längsschnitt durch eine erfindungsgemässe Ventilvorrichtung in einer dritten Ausführungsform;
- Figur 4: eine perspektivische Darstellung der erfindungsgemässen Sensoreinheit gemäss Figur 1;
- Figur 5: einen Längsschnitt durch die Sensoreinheit gemäss Figur 4;
- Figur 6: einen Teilschnitt durch der Sensoreinheit gemäss Figur 4 in vergrösserter Darstellung;
- Figur 7: eine perspektivische Darstellung eines Teils der Sensoreinheit gemäss Figur 4,
- Figur 8: eine schematische Darstellung einer erfindungsgemässen Ventilvorrichtung in einer vierten Ausführungsform mit Darstellung eines auf den Kolben bezogenen kartesischen Magnet-Koordinatensystems in einer ersten Ansicht;
- Figur 9: eine schematische Darstellung der Ventilvorrichtung gemäss Figur 8 in einer zweiten Ansicht;
- Figur 10: die Sensoreinheit gemäss Figur 6 mit eingezeichnetem kartesischem Sensor-Koordinatensystem und Kugelkoordinatensystem der Sensoreinheit;
- Figur 11: einen Längsschnitt durch eine erfindungsgemässe Ventilvorrichtung in einer fünften Ausführungsform;
- Figur 12: einen Längsschnitt durch eine erfindungsgemässe Ventilvorrichtung in einer sechsten Ausführungsform;
- Figur 13: ein Teil der Ventilvorrichtung gemäss Figur 12 in einer ersten Endposition des Kolbens eines Ventils mit Darstellung von Magnetfeldlinien;
- Figur 14: den Teil der Ventilvorrichtung gemäss Figur 12 in einer zweiten Endposition des Kolbens;
- Figur 15: eine schematische Darstellung eines Teils der Ventilvorrichtung gemäss Figur 12 mit Koordinatensystemen und vereinfachten Magnetfeldlinien;
- Figur 16: eine schematische Darstellung eines Teils der Ventilvorrichtung gemäss Figur 12 mit Koordinatensystemen und vereinfachten Magnetfeldlinien und
- Figur 17: ein Flussdiagramm zur Erläuterung der Auswertung der Messdaten der Sensoreinheit in einer Variante des Verfahrens.

Gleiche oder ähnliche Bauteile und Komponenten sind mit gleichen Bezugszeichen versehen.

### BESCHREIBUNG BEVORZUGTER AUSFÜHRUNGSFORMEN

Die in den Figuren dargestellten Ventile dienen der Erläuterung der Erfindung. Es lassen sich auch andere Arten von Ventilen mit Kolben verwenden. Die Merkmale, die in den einzelnen Figuren dargestellt sind, sind auch in den Ausführungsformen gemäss den übrigen Figuren vorhanden oder zumindest in diese Ausführungsformen integrierbar. Das nachfolgend jeweils zu einer Figur Beschriebene ist entsprechend auch für die Ventile der anderen Figuren anwendbar. In der nachfolgenden Beschreibung einer Figur sind deshalb zeitweise Hinweise auf eine andere Figur gegeben, um ein Merkmal zu erläutern, das in dieser Weise in der aktuell beschriebenen Figur nicht und nicht genügend erkennbar ist.

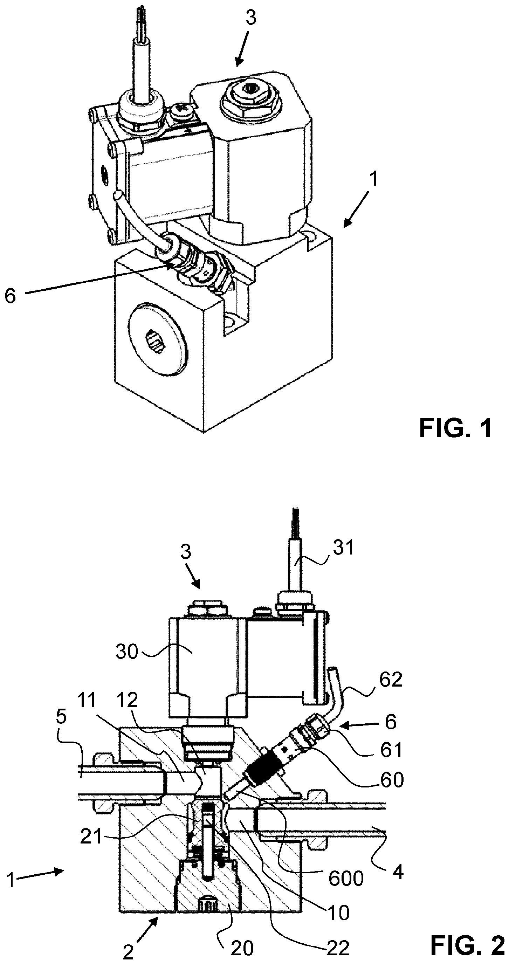

In Figur 1 ist eine erfindungsgemässe Ventilvorrichtung in einer ersten Ausführungsform dargestellt. Sie weist einen Ventilblock 1 auf mit einem in dieser Figur nicht sichtbaren Hauptventil 2 mit einem bewegbaren Kolben 21 und mit einem Gehäuse eines Magnetventils 3, auch Pilotventil genannt. Das Hauptventil 2 und der Kolben 21 sind beispielsweise in Figur 2 erkennbar. Eine Sensoreinheit 6 ist in einer Aufnahmeöffnung des Ventilblocks 1 angeordnet, wobei die Sensoreinheit 6 aus der Ausnahmeöffnung, hier eine Bohrung, teilweise herausragt. Die Sensoreinheit 6 ist in einem Winkel zu einer Bewegungsrichtung des Kolbens 21 angeordnet, d.h. sie ist schräg zu einer Längsachse des Kolbens 21 angeordnet.

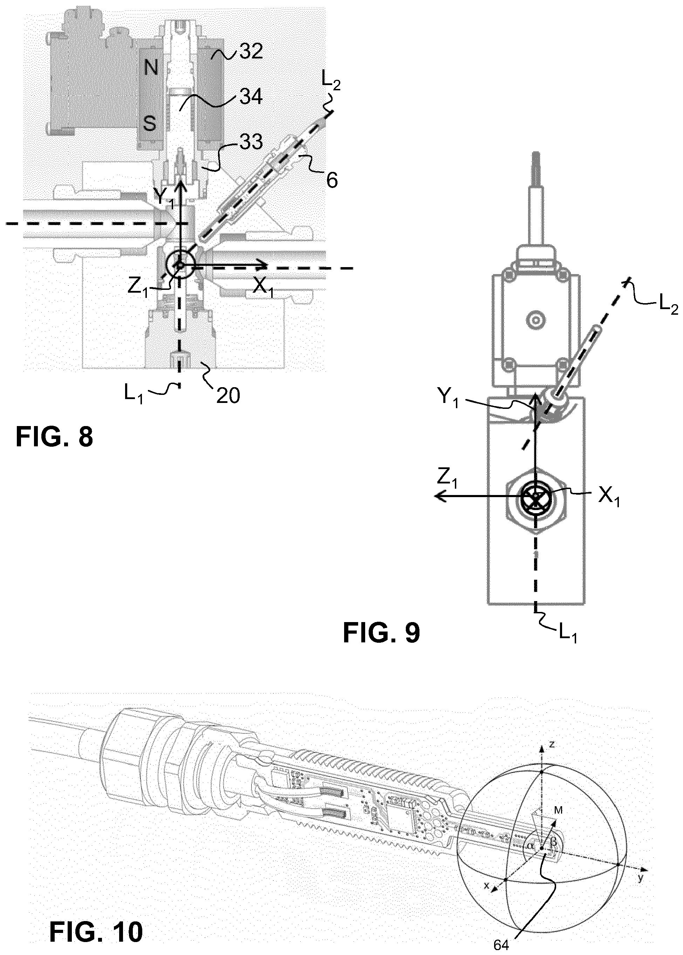

In den Figuren 8 und 9 ist die Längsachse des Kolbens mit L₁ und die Längsachse der Sensoreinheit ist mit L₂ bezeichnet. Der Kolben 21, bzw. ein am oder im Kolben 21 angeordneter Magnet 22 definieren ein kartesisches Magnet-Koordinatensystem X₁, Y₁, Z₁. Die Y₁-Achse des Magnet-Koordinatensystems verläuft vorzugsweise parallel zur Längsachse des Kolbens und somit zu seiner Bewegungsrichtung. Der Nullpunkt des Magnet-Koordinatensystems befindet sich vorzugsweise im Magnet 22. Ist anstelle des Magneten 22 ein magnetisierbares Element am oder im Kolben angeordnet, so befindet sich der Nullpunkt vorzugsweise in diesem Element. Ein entsprechende Magnet-Kugelkoordinatensystem ist nicht gezeigt. Es ist für den Fachmann jedoch auf einfache Art und Weise erstellbar.

Die Sensoreinheit 6 ist somit schräg zum Kolben 21 angeordnet. "Schräg" bedeutet, dass die Sensorachse L₂, in einem Winkel ungleich 0° zu mindestens zwei, vorzugsweise zu jeder der drei Achsen des kartesischen Koordinatensystems des Kolbens 21 bzw. des Magneten 22, verläuft.

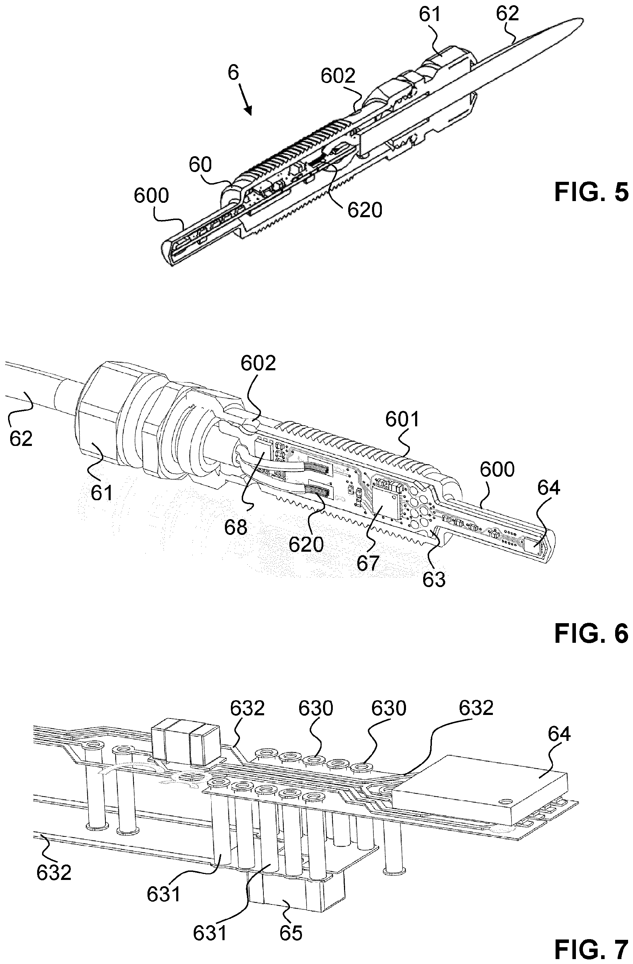

In Figur 2 ist eine erfindungsgemässe Ventilvorrichtung in einer zweiten Ausführungsform dargestellt, wobei die Sensoreinheit 6 und die Ventileinheit dieselben sind wie in Figur 1. Die Ventileinheit an sich ist bekannt. Sie entspricht in ihrer Funktionsweise im Wesentlichen dem Ventil gemäss Figur 6 der WO 2022/109041 A1.

Das Hauptventil 2 weist einen ortsfesten Ventilkörper 20 und den bewegbaren Kolben 21 auf. Im Kolben 21 ist Magnet 22 angeordnet. Vorzugsweise ist er im freien Ende des Kolbens 21 angeordnet, d.h. dem Ventilkörper 20 abgewandt. Der Magnet 22 ist vorzugsweise ringförmig, scheibenförmig oder stabförmig.

Das Magnetventil 3 weist einen elektrischen Anschluss und einen Magnetteil mit einem Magnetspulengehäuse 30 und einer Magnetspule 32 auf. Im Magnetteil ist ein Führungsrohr 33 und ein Anker 34 angeordnet. Die Magnetspule 32, das Führungsrohr 33 und der Anker 34 sind in Figur 8 erkennbar. Das Führungsrohr 33 ist üblicherweise aus einem nichtmagnetischen Material gebildet. Es ist je nach Ausführungsform einteilig, zwei- oder dreiteilig. In einer mehrteiligen Ausführungsform lässt sich ein Teil des Führungsrohrs magnetisierbar und ein anderes Teil nichtmagnetisierbar ausbilden. Die Ausrichtung des durch die Magnetspule 32 erzeugten magnetischen Feldes ist in Figur 8 durch die Angabe des Nordpols N und des Südpols S erkennbar. Diese Ausrichtung ist vorzugsweise bekannt. Sie kann jedoch auch anders gepolt sein.

Ein Einlasskanal 10 führt durch den Ventilblock 1 von aussen in eine Ventilkammer 12 des Ventilblocks 1. Ein Auslasskanal 11 führt aus der Ventilkammer 12 ebenfalls durch den Ventilblock 1 nach aussen. Der Einlasskanal 10 und der Auslasskanal 11 verlaufen in diesem Beispiel parallel versetzt zueinander. Andere Arten von Ausrichtungen sind möglich.

Im Einlasskanal 10 ist eine Einlassleitung 4 angeordnet. Im Auslasskanal 11 ist eine Auslassleitung 5 angeordnet. Der Kolben 21 verschliesst die Ventilkammer 12 gegenüber dem Einlasskanal 10.

Die Sensoreinheit 6 ist wiederum schräg im Ventilblock 1 angeordnet, Sie kann bezüglich zwei der drei Koordinatenachsen des Magneten verkippt sein oder gegenüber allen drei Koordinatenachsen. In Figur 1 ist sie gegenüber allen drei Koordinatenachsen verkippt. In Figur 2 erstreckt sich die Sensoreinheit 6 parallel bezüglich der dritten Koordinatenachse, die in der Zeichnungsebene verläuft.

Die Aufnahmeöffnung für die Sensoreinheit 6 befindet sich zwischen der Einlassöffnung 10 und dem Magnetventil 3.

Die Sensoreinheit 6 ist stabförmig ausbildet. Sie weist ein Gehäuse 60 auf mit einem Aussengewinde 601. Es ist in die Aufnahmeöffnung des Ventilblocks 1 eingeschraubt. Die Verwendung eines Gewindes ist lediglich eine von mehreren Arten, wie die Sensoreinheit 6 im Ventilblock fixiert werden kann. Alternativen sind beispielsweise ein Bajonettverschluss oder eine Schnapp-, Feder- oder Klemmverbindung ohne Drehung der Sensoreinheit. In einigen Ausführungsformen ist die Drehposition im montierten Zustand unbestimmt. In anderen Ausführungsformen ist ein gerichteter Einbau ermöglicht, so dass die Sensoreinheit ein einer definierten Drehposition im Ventilblock 1 angeordnet ist. Dies lässt sich beispielsweise mittels einer Nut in der Sensoreinheit und einem entsprechenden Zapfen im Ventilblock erreichen.

Ein Sensorkabel 62 ist fest mit dem Gehäuse 60 verbunden. Vorzugsweise mittels einer Kabelverschraubung 61. Vorzugsweise ist das Sensorkabel 62 zusätzlich im Gehäuse 60 vergossen, beispielsweise mit Epoxid.

Der gegenüberliegende freie Endbereich 600 der Sensoreinheit 6 ist vorzugsweise verjüngt. In seiner Spitze oder nahe der Spitze ist ein Magnetfeldsensor 64 angeordnet. Der freie Endbereich 600 und somit der Magnetfeldsensor 64 sind optimiert nahe an den Magneten 22 des bewegbaren Kolbens 21 angeordnet. Dadurch lässt sich die Position des Kolbens 21 mittels des Magnetfeldsensors 64 detektieren.

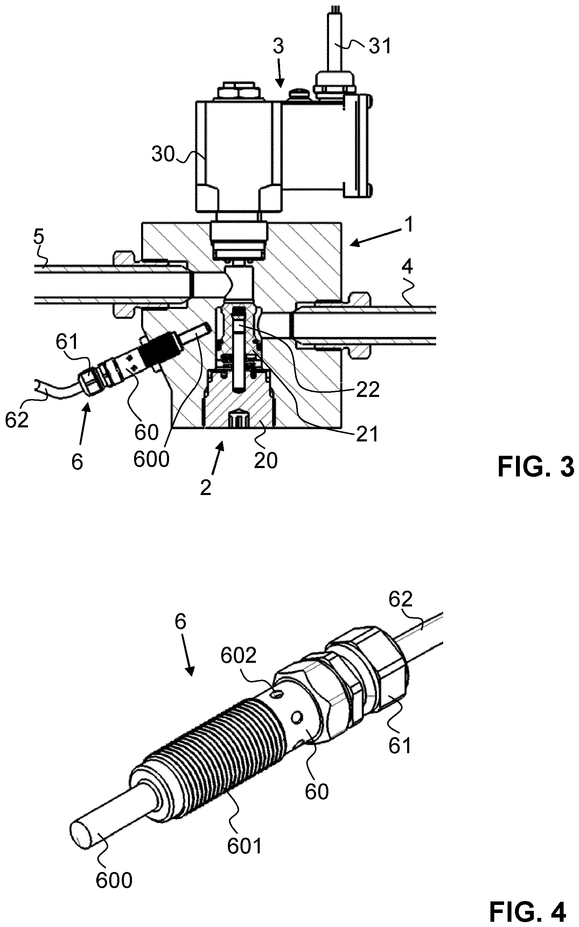

In Figur 3 ist eine Variante der Ventilvorrichtung gemäss Figur 2 dargestellt. Sie unterscheidet sich darin, dass die Aufnahmeöffnung für die Sensoreinheit 6 zwischen Auslassöffnung 11 und einer Aufnahmeöffnung des Ventilkörpers 20 liegt.

In den Figuren 4 bis 7 ist die Sensoreinheit 6 dargestellt. Sie ist stabförmig ausgebildet und weist ein Gehäuse 60 mit einem verjüngten freien Endbereich 600 auf. Das Sensorkabel 62 ist in das Gehäuse 60 eingeführt, wobei es mittels der Kabelverschraubung 61 fest mit dem Gehäuse 60 verbunden ist. Die Kabelenden 620 sind auf eine Leiterplatte 63 gelötet.

Die Leiterplatte 63 ist vollständig vom Gehäuse 60 umgeben. Das Gehäuse 60 ist vorzugsweise mindestens teilweise ausgegossen, vorzugsweise mit Epoxid.

Im freien Endbereich 600 ist die Leiterplatte 63 vorzugsweise verjüngt. An ihrem vorderen Ende ist der Magnetfeldsensor 64 angeordnet. Er ist vorzugsweise ein 2D Hallsensor und noch bevorzugter ein 3D Hallsensor. Alternativ ist er ein anderer Sensor, der die Feldvektoren des Magnetfeldes des Magnets 22 im zwei- oder dreidimensionalen Raum erfassen kann.

Vorzugsweise ist ein Mikrocontroller 67 auf der Leiterplatte 63 angeordnet. Er weist eine Auswerteeinheit zur Auswertung der Signale des Magnetfeldsensors 64 auf. Der Microcontroller 67 ist vorzugsweise im breiteren Bereich der Leiterplatte 63 angeordnet.

Ferner ist mindestens eine Leuchtdiode (LED) 68 auf der Leiterplatte 63 vorhanden. Sie ist benachbart zum mindestens einen Fenster 602 platziert.

Ferner ist eine Heizung 65 vorhanden, welche vorzugsweise im freien Endbereich 600 benachbart zum Magnetfeldsensor 64 auf der Leiterplatte 63 angeordnet ist. Die Heizung 65 befindet sich vorzugsweise in Längsrichtung der Sensoreinheit 6 versetzt und mit einem Abstand zum Magnetfeldsensor 64 auf der gegenüberliegenden Seite der Leiterplatte 63. Die Heizung 65 lässt sich, wenn genügend Platz vorhanden ist, auch auf derselben Seite der Leiterplatte 63 anordnen wie der Magnetfeldsensor 64.

In Figur 7 ist lediglich ein Teil der Leiterplatte 63 in diesem Bereich dargestellt. Die Oberseite und die Unterseite der Leiterplatte 63 sind erkennbar und mit dem Referenzzeichen 63 versehen. Nicht dargestellt sind die Umrisslinien der Leiterplatte 63. Auch nicht erkennbar ist das Material der Leiterplatte 63 zwischen dieser Oberseite und Unterseite.

In Figur 7 sind die Leiterbahnen 632 der Leiterplatte 63 erkennbar, die teilweise vom Mikrocontroller 67 zur Heizung 65 und zum Magnetfeldsensor 64 führen. Damit die Wärme von der Heizung 65 gezielt zum Magnetfeldsensor 64 geführt wird, sind in der Leiterplatte 63 Durchgangsöffnungen 630, auch Vias genannt, vorhanden. Sie sind zylinderförmig, wobei ihre Innenwände mit Kupfer beschichtet sind. Die Kupferwände 631 sind in Figur 7 erkennbar. Um die Wärme optimal zu leiten, ist zwischen der Unterseite der Leiterplatte 63 und der Heizung 65 vorzugsweise ein Wärmeleitpad angeordnet. Dieses ist in den Figuren nicht erkennbar.

Weist die Ventilvorrichtung ein Magnetventil auf, so kann das Magnetfeld der Leiterspule des Magnetventils die Messung des Magnetfeldsensor 64 beeinflussen. Ist das Magnetventil in einem Gehäuse aus magnetisch leitendem Material angeordnet, so ist das Störfeld bereits reduziert, da die Magnetfeldlinien des in der Leiterspule erzeugten Magnetfelds zum Gehäuse umgelenkt sind.

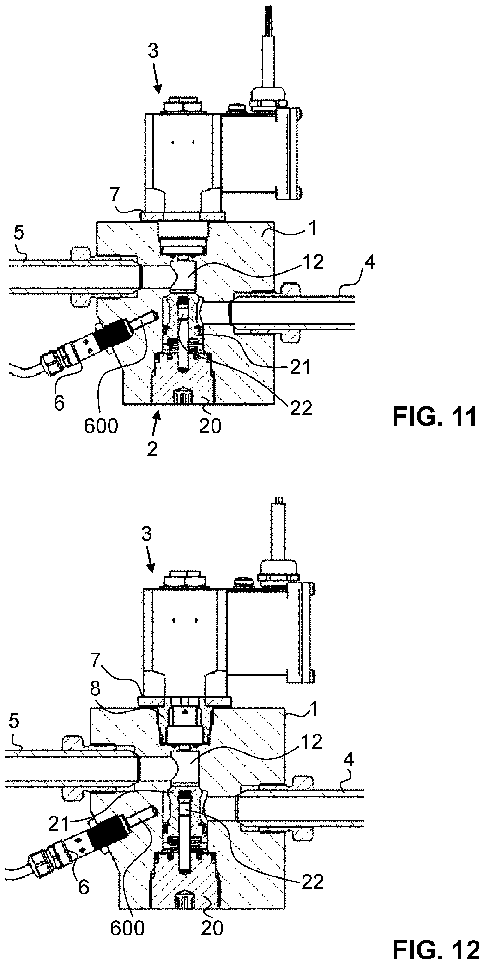

Eine alternative oder zusätzliche Reduzierung des Störfeldes ist die Anbringung eines Umlenkungselements, welches das Magnetfeld des Magnetventils vom Magnetfeldsensor 64 weg umlenkt. Das Umlenkelement besteht aus einem gut magnetisch leitenden Material. In den Figuren 11 und 12 sind zwei Beispiele hierfür angegeben. In Figur 11 umgibt eine Ringplatte 7 aus einem gut magnetisch leitenden Material das Führungsrohr 33 des Ankers 34 des Magnetventils 3. In Figur 12 ist zusätzlich zur Ringplatte 7 eine Hülse 8 aus einem gut magnetisch leitenden Material vorhanden. Die Hülse 8 ist vorzugsweise ein magnetisierbarer Teil des ansonsten nicht magnetisierbaren Führungsrohrs 33. Die Hülse 8 kann auch ohne Ringplatte 7 eingesetzt werden.

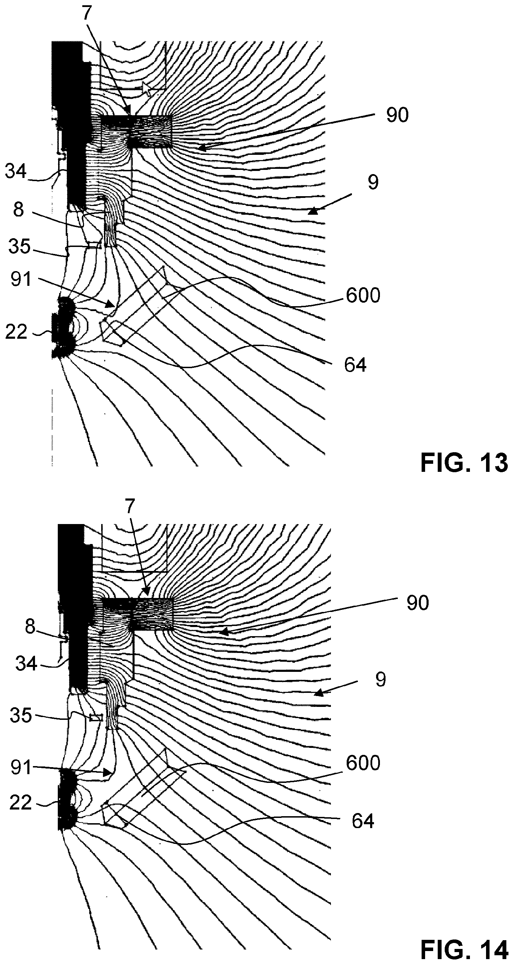

In Figur 10 ist ein kartesisches Sensor-Koordinatensystem x, y, z sowie ein zugehöriges Kugelkoordinatensystem M, α, β erkennbar, deren Nullpunkte identisch sind und die durch den Magnetfeldsensor 64 verlaufen. Die y-Achse verläuft in der Längsrichtung der Sensoreinheit 6. Der Radialwinkel α ist in der xz-Ebene definiert und wird durch die Projektion des 3D Feldvektors des Magnetfeldsensors 64 bestimmt. Er hat einen Wertebereich von 0 bis 360°. Der Axialwinkel β hat einen Wertebereich von 0 bis 180°. Er liegt in der Ebene, die zwischen dem 3D Vektor der Feldstärke und der y-Achse aufgespannt ist. Diese Ebene dreht um die y-Achse mit, wenn der 3D Vektor um die y-Achse dreht. Eine Drehung der Sensoreinheit 6 um die y-Achse, d.h. um die Rotationsachse beim Einschrauben der Sensoreinheit 6 in den Ventilblock 1, beeinflusst somit lediglich den Radialwinkel α, nicht jedoch den Axialwinkel β. Vorzugsweise wird deshalb der Axialwinkel β ausgewertet, nicht jedoch der Radialwinkel α. Bei einer ausgerichteten Montage der Sensoreinheit 6 im Ventilblock 1 lässt sich jedoch auch der Radialwinkel α auswerten. Die dargestellte Anordnung des Sensor-Koordinatensystems entspricht einer idealen Anordnung, bei welcher das Sensorelement des Magnetfeldsensors im Nullpunkt angeordnet ist. In der Praxis ist für den durch den Magnetfeldsensor gemessenen Feldvektor üblicherweise eine Nullpunktkorrektur notwendig, wie weiter unten im Text anhand der Figur 14 beschrieben ist.

In den Figuren 13 und 14 sind Magnetfeldlinien des Magnetventils 3 sowie des Magneten 22 des überwachten Kolbens 21 erkennbar. Der Anker 34 ist schematisch dargestellt. Die Hülse 8 ist mit der Ringplatte 7 versehen.

Der Magnet 22 ist im Kolben 21 angeordnet. Die Pole des Magneten 22 sind, wie anhand der dargestellten Magnetfeldlinien 9 erkennbar ist, in Bewegungsrichtung des Kolbens 21 oben bzw. unten.

Der Kolben 21 ist in den Figuren nicht dargestellt. Der ortsfest mit dem Kolben 21 verbundene Magnet 22 zeigt in den Figuren 13 und 14 jedoch seine Position an. Die Position des Ankers 34 des Magnetventils 3, d.h. des Magnetteils, ist anhand des dargestellten Sicherungsrings 34 des Magnetteils erkennbar. Der Sicherungsring 34 wird auch Seeger-Ring genannt. In Figur 13 befindet sich der Kolben 21 in einer ersten Endposition des Kolbens 21 und somit im offenen Zustand des Hauptventils und in Figur 14 in einer zweiten Endposition des Kolbens 21 und somit im geschlossenen Zustand des Hauptventils.

Der freie Endbereich 600 der Sensoreinheit und der Magnetfeldsensor 64 sind in beiden Figuren 13, 14 schematisch dargestellt. Sie sind ortsfest in der Ventilvorrichtung angeordnet.

Wie erkennbar ist, werden die Magnetfeldlinien des Störfeldes 90 der Leiterspule 32 in die Hülse 8 und die Ringplatte 7 umgelenkt. Das Störfeld 90 hat somit im Bereich des Magnetfeldsensors 64 einen geringen Einfluss.

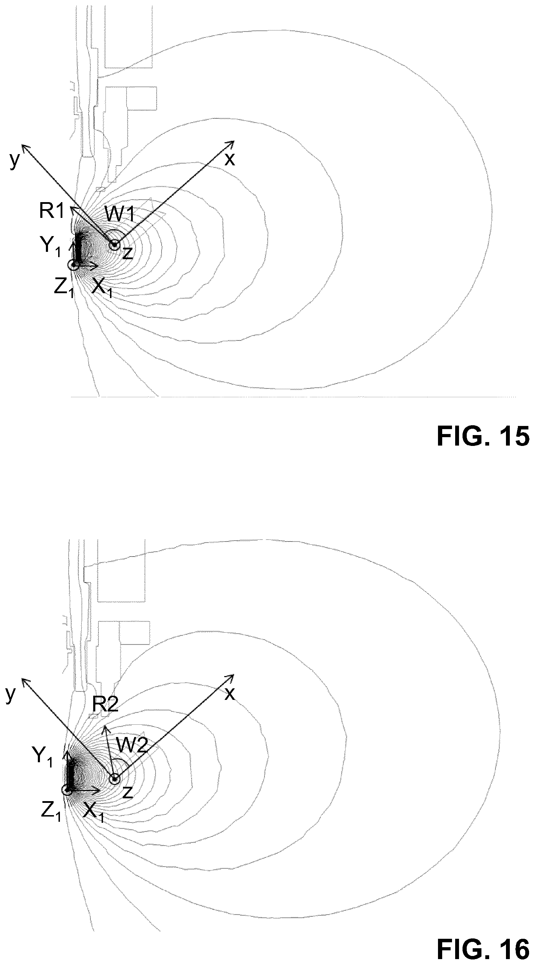

In den Figuren 15 und 16 ist dieselbe Situation wie in den Figuren 13 und 14 dargestellt, wobei nur noch das Magnetfeld des Magneten 22 mit vereinfachten Linien dargestellt ist. Die Position des Kolbens 21 in Figur 15 entspricht der Position der Figur 13, die Position des Kolbens 21 in Figur 16 entspricht derjenigen in Figur 14.

Wie durch die Zusammenschau der Figuren 13 und 14 sowie der Figuren 15 und 16 erkennbar ist, verursacht die Bewegung des Kolbens 21 und somit des Magneten 22 eine Änderung der Magnetfeldlinien 9. Gut erkennbar ist dies in den Figuren 13 und 14 für die Magnetfeldlinie 91. Im Bereich des Magnetfeldsensors 64 ändert sich insbesondere der Winkel W des Feldvektors R sowie die Länge bzw. der Betrag des Feldvektors R. Diese Änderung des Feldvektors R ist in den Figuren 15 und 16 gut erkennbar. Zu beachten ist, dass die Koordinatensysteme in Figur 10 und das Koordinatensystem in den Figuren 15 und 16 nicht gleich ausgerichtet sind. In Figur 10 verläuft die y-Achse entlang der Längsrichtung der Sensoreinheit, in den Figuren 15 und 16 ist dies die x-Achse, jedoch in umgekehrter Richtung. Die Auswertung der Daten ist dieselbe unter Berücksichtigung der unterschiedlichen Definition der Koordinatensysteme.

Wie bereits oben dargelegt, ändert sich insbesondere der Axialwinkel, so dass die in den Figuren dargestellten Winkel W1 und W2 im Wesentlichen dem Axialwinkel entsprechen. Die Änderung im Radialvektor ist in den Figuren 15 und 16 mit R1 und R2 bezeichnet. Diese Winkel bzw. die Winkeländerung ΔW wird mittels des Magnetfeldvektors 64 und der Auswerteeinheit erfasst und ausgewertet, um Auskunft über die Position des Kolbens 21 zu erhalten. In einigen Ausführungsformen werden auch die Beträge bzw. die Betragsänderung ΔR erfasst und ausgewertet.

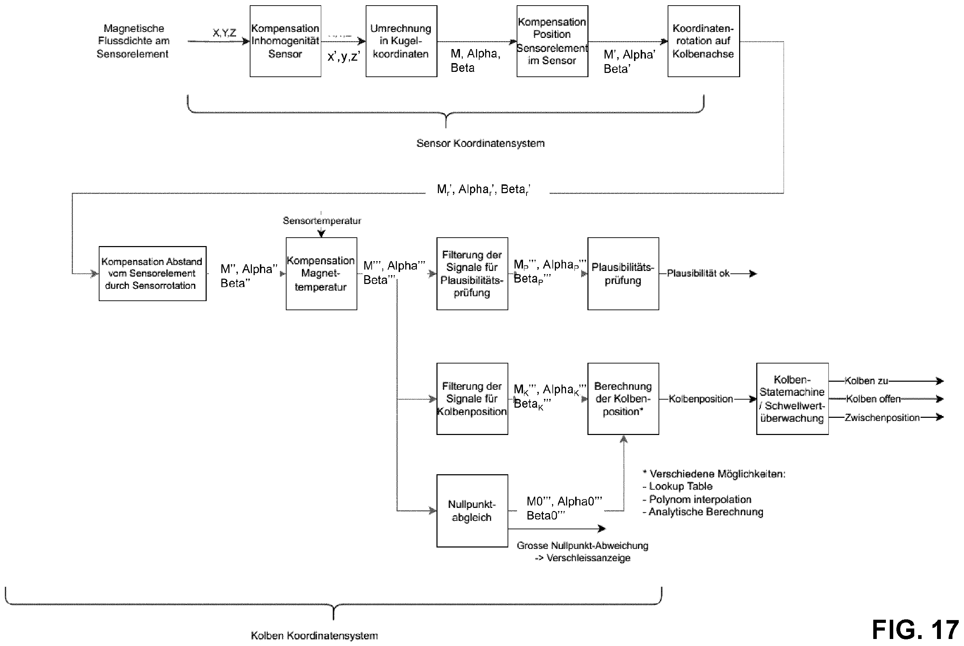

In Figur 17 ist in einem Flussdiagramm angegeben, wie das erfindungsgemäss Verfahren beispielsweise erfolgt, um die oben erwähnte Auskunft über die Position des Kolbens zu erhalten.

Der Magnetfeldsensor 64 misst mittels seines Sensorelements die magnetische Flussdichte in x, y und z Richtung des kartesischen Sensor-Koordinatensystems. Vorzugsweise werden die erhaltenen Werte basierend auf vorbekannten Inhomogenitäten des Sensors angepasst. Die derart kompensierten Werte x', y', z' des Feldvektors werden in Kugelkoordinaten M, Alpha und Beta umgerechnet. Vorzugsweise erfolgt eine Kompensation der vorbekannten Abweichung der Position des Sensorelements von der Nullposition. Die kompensierten Kugelkoordinaten M', Alpha' und Beta' werden rotiert, damit die Koordinatenachse M' des Kugelkoordinatensystems parallel zur Längsmittelachse L₁ des Kolbens 21 und somit zur y-Achse des Magnet-Koordinatensystems verläuft.

Da sich das Hall-Sensorelement auf der Oberfläche der Leiterplatte im Magnetfeldsensor befindet und da sich die Mittelebene der Printplatte in der Sensorachse befindet, hat das Sensorelement einen Abstand zur Rotationsachse des Sensors. Der Abstand beträgt üblicherweise eine halbe Dicke der Leiterplatte. Dank des Radialwinkels (siehe Figur 10) lässt sich durch Rotieren des Sensors erkennen, in welcher Richtung vom Sensorelement aus gesehen sich das Magnet befindet. Dadurch lässt sich der oben genannte Abstand kompensieren. Es werden dadurch kompensierte Kugelkoordinaten M", Alpha" und Beta" erhalten.

Vorzugsweise weist die Sensoreinheit 6 mindestens einen Temperatursensor auf zur Messung der Temperatur der Sensoreinheit 6 oder zur Messung der Temperaturen von verschiedenen Bauteilen oder von verschiedenen Bereichen der Sensoreinheit 6. Vorzugsweise wird die Temperatur des Magnetfeldsensors 64 gemessen. Diese gemessene Temperatur wird vorzugsweise bei einer weiteren Kompensation und somit Korrektur der Kugelkoordinaten berücksichtigt. Die erhaltenen Koordinaten sind M‴, Alpha‴ und Beta'". Diese Koordinaten bzw. Signale lassen sich filtern für die Berechnung der Kolbenposition (M_{K}‴, Alpha_{K}‴ und Beta_{K}‴). Ausgabewert ist die Information, ob sich der Kolben im geschlossenen Zustand, im offenen Zustand oder in einer Zwischenposition befindet. Die Berechnung lässt sich auf unterschiedliche Art und Weise durchführen. Beispielsweise anhand einer Lookup-Tabelle, anhand Polynom-Interpolationen und/oder mittels analytischer Berechnungen. Ein Nullpunkt-Abgleich basierend auf ermittelten Nullpunkt-Koordinaten M0‴, Alpha0‴ und Beta0‴ wird vorzugsweise zur Berechnung der Kolbenposition ebenfalls verwendet.

Vorzugsweise wird mittels einer Filterung zusätzlich oder vorgängig eine Plausibilitätsprüfung durchgeführt, um zu prüfen, ob die gemessenen und kompensierten Werte innerhalb eines vorgegebenen Rahmens liegen (M_{P}‴, Alpha_{P}‴ und Beta_{P}‴). Ist dies nicht der Fall, wird eine Fehlermeldung generiert bzw. ein Fehler wird angezeigt.

Im Falle einer grossen Abweichung der gemessenen und kompensierten Werte vom ermittelten Nullpunkt wird angezeigt, dass der Verschleiss des Ventils relativ hoch ist und dieses zeitnah ausgewechselt werden sollte.

Die erfindungsgemässe Vorrichtung und das erfindungsgemässe Verfahren ermöglichen eine genaue Positionsbestimmung des Kolbens auch bei beengten Platzverhältnissen.

### BEZUGSZEICHENLISTE

| | | | |
|---|---|---|---|
| 1 | Ventilblock | 632 | Leiterbahn |
| 10 | Einlasskanal | 64 | Magnetfeldsensor |
| 11 | Auslasskanal | 65 | Heizung |
| 12 | Ventilkammer | 67 | Mikrocontroller |
| 2 | Hauptventil | 68 | Leuchtdiode (LED) |
| 20 | Ventilkörper | | |
| 21 | Kolben | 7 | Ringplatte |
| 22 | Magnet | 8 | Hülse |
| 3 | Magnetventil | | |
| 30 | Magnetspulengehäuse | 9 | Magnetfeldlinien |
| 31 | elektrischer Anschluss | 90 | Störfeld |
| 32 | Leiterspule | 91 | Magnetfeldlinie |
| 33 | Führungsrohr | | |
| 34 | Anker | x, y, z | kartesisches Sensor-Koordinatensystem |
| 35 | Sicherungsring (Seeger-Ring) | | |
| | | M, α, β | Sensor-Kugelkoordinatensystem |
| 4 | Einlassleitung | X₁, Y₁, Z₁ | kartesisches Magnet-Koordinatensystem |
| 5 | Auslassleitung | | |
| | | L₁ | Längsmittelachse des Kolbens |
| 6 | Sensoreinheit | | |
| 60 | Gehäuse | L₂ | Sensorachse |
| 600 | freier Endbereich | N | Nordpol |
| 601 | Aussengewinde | S | Südpol |
| 602 | Fenster | R1, R2 | Feldvektor |
| 61 | Kabelverschraubung | W1, W2 | Winkel |
| 62 | Sensorkabel | | |
| 620 | Kabelende | | |
| 63 | Leiterplatte | | |
| 630 | Durchgangsöffnung | | |
| 631 | Kupferwand | | |

## Patentansprüche

1. Ventilvorrichtung
- mit einem Ventil, das einen bewegbaren Kolben (21) zum Schliessen und Öffnen des Ventils aufweist,
- mit einem Magneten (22) oder einem magnetisierbaren Element und
- mit einer Sensoreinheit (6), die einen Magnetfeldsensor (64) zur Bestimmung einer Position des Kolbens (21) aufweist,
wobei der Magnet (22) oder das magnetisierbare Element und die Sensoreinheit (6) durch die Bewegung des Kolbens (21) relativ zueinander bewegbar sind,
wobei der Magnetfeldsensor (64) zur Erfassung eines mindestens zweidimensionalen Vektors einer magnetischen Flussdichte ausgebildet ist,
**dadurch gekennzeichnet,**
**dass** eine Auswerteeinheit vorhanden ist, die eine Winkeländerung des mindestens zweidimensionalen Vektors bestimmt.

2. Ventilvorrichtung
nach Anspruch 1, wobei der Magnetfeldsensor (64) zur Erfassung eines dreidimensionalen Vektors einer magnetischen Flussdichte ausgebildet ist.

3. Ventilvorrichtung nach einem der Ansprüche 1 oder 2, wobei der Magnetfeldsensor (64) ein 2D Hallsensor oder ein 3D Hallsensor ist.

4. Ventilvorrichtung nach einem der Ansprüche 1 bis 3, wobei der Magnet (22) oder das magnetisierbare Element ein dreidimensionales kartesisches Koordinatensystem mit drei Achsen (X₁, Z₁, Z₁) definiert und wobei der Magnetfeldsensor (64) schräg zu den Achsen (X₁, Z₁, Z₁) angeordnet ist.

5. Ventilvorrichtung nach Anspruch 4, wobei der Magnet (22) oder das magnetisierbare Element zentrisch zu einer Längsmittelachse (L₁) des Kolbens (21) angeordnet ist.

6. Ventilvorrichtung nach einem der Ansprüche 1 bis 5, wobei die Sensoreinheit (6) schräg zu einer Längsmittelachse (L₁) des Kolbens (21) angeordnet ist.

7. Ventilvorrichtung nach einem der Ansprüche 1 bis 6, wobei das Ventil der Ventilvorrichtung oder ein zweites Ventil der Ventilvorrichtung eine ein Magnetfeld erzeugende Leiterspule (32) aufweist.

8. Ventilvorrichtung nach Anspruch 7, wobei die Leiterspule (32) mit einer vordefinierten Bestromungsrichtung in der Ventilvorrichtung angeordnet ist.

9. Ventilvorrichtung nach einem der Ansprüche 7 oder 8, wobei zwischen der Leiterspule (32) und dem Magnetfeldsensor (54) ein Umlenkungselement (7, 8) aus einem magnetisch leitenden Material angeordnet ist.

10. Ventilvorrichtung nach einem der Ansprüche 1 bis 9, wobei die Sensoreinheit (6) eine Heizung (65) zur Erwärmung des Magnetfeldsensors (64) aufweist.

11. Ventilvorrichtung nach Anspruch 10, wobei der Magnetfeldsensor (64) auf einer ersten Seite einer Leiterplatte (63) angeordnet ist und die Heizung (65) auf einer der ersten Seite gegenüberliegenden Seite der Leiterplatte (63) angeordnet ist, wobei die Leiterplatte (63) Durchgangsöffnungen (630) aufweist, die sich im Bereich der Heizung (65) von der zweiten Seite zur ersten Seite der Leiterplatte (63) erstrecken, wobei in den Durchgangsöffnungen (630) ein Wärmeleiter (631), vorzugsweise aus Kupfer, angeordnet ist.

12. Ventilvorrichtung nach einem der Ansprüche 1 bis 11, wobei die Sensoreinheit (6) ein Gehäuse (60) aufweist, wobei das Gehäuse (60) eine längliche Form aufweist und in einem freien Endbereich (600) endet und wobei der Magnetfeldsensor (64) im freien Endbereich (600) angeordnet ist.

13. Sensoreinheit einer Ventilvorrichtung gemäss einem der Ansprüche 1 bis 12,
wobei die Sensoreinheit (6) den Magnetfeldsensor (64) zur Bestimmung der Position des Kolbens (21) aufweist,
wobei der Magnetfeldsensor (64) zur Erfassung eines mindestens zweidimensionalen Vektors einer magnetischen Flussdichte ausgebildet ist,
und wobei die Sensoreinheit (6) eine Auswerteeinheit aufweist, die eine Winkeländerung des mindestens zweidimensionalen Vektors bestimmt.

14. Verfahren zur Bestimmung einer Position eines Kolbens (21) in einer Ventilvorrichtung gemäss einem der Ansprüche 1 bis 12, wobei der Magnetfeldsensor (64) einen mindestens zweidimensionalen Vektor einer magnetischen Flussdichte erfasst und mittels des Magnetfeldsensors (64) die Position des Kolbens (21) bestimmt wird,
**dadurch gekennzeichnet,**
**dass** mittels der Auswerteeinheit die Winkeländerung des mindestens zweidimensionalen Vektors bestimmt wird, wobei die Winkeländerung bei der durch die Bewegung des Kolbens (21) erzeugte Bewegung des Magneten (22) oder des magnetisierbaren Elements und der Sensoreinheit (6) zueinander erfolgt.

15. Ventilvorrichtung
- mit einem Ventil, das einen bewegbaren Kolben (21) zum Schliessen und Öffnen des Ventils aufweist,
- mit einem Magneten (22) oder einem magnetisierbaren Element und
- mit einer Sensoreinheit (6), die einen Magnetfeldsensor (64) zur Bestimmung einer Position des Kolbens (21) aufweist,
wobei der Magnet (22) oder das magnetisierbare Element und die Sensoreinheit (6) durch die Bewegung des Kolbens (22) relativ zueinander bewegbar sind,
**dadurch gekennzeichnet,**
**dass** die Sensoreinheit (6) schräg zu einer Längsmittelachse (L₁) des Kolbens (21) angeordnet ist.
